# EUROPEAN PATENT APPLICATION

(11) **EP 2 471 623 A1**
(43) Date of publication of application: **04.07.2012**
(21) Application number: 12162254.2
(22) Date of filing: 31.03.2009
(51) Int. Cl.: B23K 9/013, B23K 9/23, B23K 9/29, B08B 7/00, C23F 4/02, C23G 5/00, F01D 5/00, F01D 5/12, F01D 25/00

(54) **Cleaning device using an electric arc**

(30) Priority: 26.08.2008 US 198357
(62) Divisional of application: 09250978.5
(71) Applicant: United Technologies Corporation, Hartford, CT 06101 (US)
(72) Inventor: Gero, Peter F., Portland, CT Connecticut 06480 (US); Sousa, Leonard N., Columbia, CT Connecticut 06237 (US)
(74) Representative: Leckey, David Herbert

(57) **Abstract**

A cleaning device (10) utilizes an electric circuit including a power supply (12) electrically attached through a first lead (14) to the alloy structure (32) and a second lead (16) connected to a probe (20). A protective atmosphere (24) is provided over the surface of the alloy (38) that is to be cleaned. Electric energy supplied by the power source (12) generates an electric arc (28) between the probe (20) and the surface (38) of the structure (32) within the protective atmosphere (24). The electric interaction created by the electric arc (28) and the surface (38) of the alloy structure (32) removes built up undesired material (34).

## Description

### BACKGROUND OF THE INVENTION

This invention generally relates to the cleaning of alloys. More particularly, this invention relates to a method of cleaning alloys utilizing an electric arc in localized areas of the alloy.

At least some known alloys exposed to an oxidizing environment at an elevated temperature generally accumulate a layer of oxide or other materials that may degrade the performance and quality of subsequent coating or welding processes. Additional processes are implemented to remove the oxide layer. At least some known methods of removing the oxide layer include the use of an abrasive substance impacted on a surface of the alloy. Because the impact of the abrasive substance will undesirably remove portions of the alloy structure, the alloy cannot be cleaned to the degree necessary with known abrasive grit processes.

Accordingly, it is desirable to develop a device and method for removing oxide layers and other undesired surface contamination from an alloy without undesirably degrading the underlying structural features.

### SUMMARY OF THE INVENTION

An example disclosed cleaning device and process utilizes an electric arc within a protective atmosphere to remove undesired scales and oxides.

An example cleaning device and method utilizes an electric circuit including a power supply electrically attached through a first lead to the alloy structure and a second lead connected to a probe. A protective atmosphere is provided over the surface of the alloy that is to be cleaned. Electric energy supplied by the power source generates an electric arc between the probe and the surface of the structure within the protective atmosphere. The electric interaction created by the electric arc and the surface of the alloy removes built up undesired material.

Accordingly, the disclosed cleaning device and method provides an effective process for removing undesired material without damaging the underlying structural features.

These and other features of the present invention can be best understood from the following specification and drawings, the following of which is a brief description.

### BRIEF DESCRIPTION OF THE DRAWING

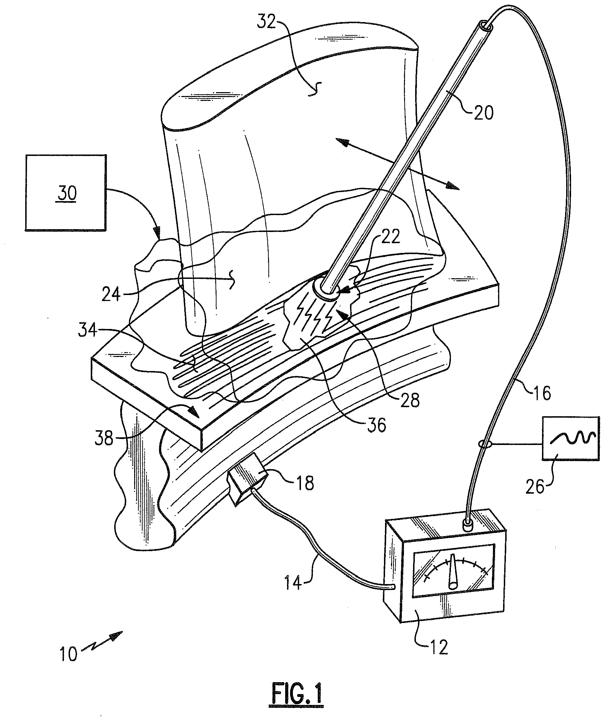

Figure 1 is a schematic representation of an example electric arc cleaning method.

### DETAILED DESCRIPTION OF THE PREFERRED EMBODIMENT

Figure 1 illustrates a cleaning device 10 for removing oxides and other undesired substances from a surface of an alloy. The cleaning device 10 includes an electric circuit including an electric power source 12 that is attached electrically through a first lead 14 to an alloy structure 32 such as, but not limited to, an airfoil assembly. It should be appreciated that the alloy structure 32 may include any metal structure fabricated from an electrically conductive material.

The first lead 14 is electrically attached by way of a clip 18 to the alloy structure 32. The clip 18 is fabricated to fit the alloy structure 32 and transfer electric energy into the alloy structure 32. A second lead 16 from the power source 12 is electrically connected to a probe 20 that is fabricated from an electrically conductive material to facilitate removal of an undesirable, built up scale 34 by focusing electrical energy on a surface 38 of the structure 32.

The probe 20 includes a probe tip 22 that is fabricated from a tungsten material to provide the desired electric arc and provide a desired longevity. Although the example probe tip 22 is fabricated from tungsten materials, other electrically conductive materials including alloys of tungsten, copper or any other known electrically conductive materials are within the contemplation of this invention. Further, the material selected for use as the probe tip 22 will also include properties desired to provide a desired longevity and durability in view of the electrical energy being utilized and the specific alloy material being cleaned.

During operation of cleaning device 10, energy supplied by the power source 12 generates an electric arc 28 between the probe tip 22 and the surface 38 of the alloy structure 32. In one exemplary embodiment, the power source 12 communicates an alternating electric current 26 to the probe tip 22. When the probe tip 22 is placed close enough to the surface 38 of the alloy structure 32, the structure 32 and the probe tip 22 both receive the alternating electric current 26 to generate an alternating electric arc 28 therebetween. The alternating electric arc 28 communicates electric energy to the surface 38 at a defined interval. The defined interval is determined according to application specific requirements such as the alloy material, the amount of substance on the surface 38 and the amount of electrical power available. The alternating electric arc 28 provides an electric interaction between the probe tip 22 and the surface 38 to facilitate removing the undesired, built up scale 34 and disclose cleaned portions 36.

The probe tip 22 is brought into proximity of the surface 38 where cleaning is to be conducted. The probe tip 22 is generally moved in sweeping motions over the area desired to be cleaned. For example, the probe tip 22 is swept over the area desired to be cleaned to facilitate visible removal of the scale 34. Once the desired area is visibly cleaned, the probe tip 22 may be moved to other areas of the alloy structure 32 for cleaning.

The alternating electric arc 28 is also generated within a protective atmosphere 24 that includes an inert gas such as, for example, argon. For example, the protective atmosphere 24 is generated by supplying an inert gas from a source of gas 30 to an area that is desired to be cleaned. As a result of the electric current arc 28 within the protective atmosphere 24, the cleaning process facilitates removing low atomic weight oxide-formers by the electrical interaction of the alternating electric arc 28 with the surface 38 of the alloy structure 32.

It should be appreciated by a person of ordinary skill in the art that the power and current supplied by the power source 12 may be adjusted to provide the desired electric arc power that facilitates removal of the scale 34 from the alloy structure 32. It should also be appreciated that the alternating current electric arc 28 may be continually applied with a constant supplied current of a power determined to facilitate removal of scale 34. Further, it should be appreciated that the alternating current 26 from the power source 12 may be pulsed at a desired predetermined interval to generate a pulsing electric arc.

The scale 34 is formed of oxides upon exposure to engine operating conditions or other oxide producing environments. Removal of other forms and compositions of the undesired scales 34 may also be facilitated with the cleaning device 10 to prepare the surface 38 of the alloy structure 32 for subsequent processes such as, but not limited to welding, brazing, coating and other processes that benefit from an oxide free or substantially bare alloy surface. As a result of the exemplary methods and device, the scale 34 removal facilitates subsequent process efficiencies that would not otherwise be available in the presence of oxidative scales and coatings on the surface 38 of the alloy structure 32.

Accordingly, the cleaning device 10 and method provides an effective process for facilitating removal of undesired oxide scale from areas of alloy structures to facilitate improving subsequent processing without damaging the underlying structural features.

Although a preferred embodiment of this invention has been disclosed, a person of ordinary skill in this art would recognize that certain modifications would come within the scope of this invention. For that reason, the following claims should be studied to determine the true scope and content of this invention.

## Claims

1. A cleaning device (10) for removing surface contamination (34) from an alloy structure (32), the cleaning device (10) comprising:
an electric power source (12) including a first lead (14) and a second lead (16);
a connection device (18) for electrically attaching the first lead (14) to the alloy structure (32); and
a probe (20) electrically attached to the second lead (16) for generating an electric arc between the probe (20) and a surface (38) of the alloy structure (32).

2. The cleaning device as recited in claim 1, including a protective atmosphere (24) disposed over the surface (38) of the alloy structure (32).

3. The cleaning device as recited in any preceding claim, wherein the protective atmosphere (24) comprises an inert gas.

4. The cleaning device as recited in claim 3, wherein the inert gas comprises argon.

5. The cleaning device as recited in any preceding claim, where the electric power source (12) generates an alternating current arc between the probe (20) and the surface (38) of the alloy structure (32).

6. The cleaning device as recited in any preceding claim wherein the probe (20) is movable over the surface (38) of the alloy structure (32) for selectively directing the electric arc.

7. The cleaning device as recited in any preceding claim, wherein the probe (20) is configured so as to be movable in sweeping motions over an area of the alloy structure to selectively direct the electric arc and remove the surface contamination.

8. The cleaning device as recited in any preceding claim, wherein the probe (20) comprises tungsten.
